# FASCICULE DE BREVET EUROPEEN

(11) **EP 2 290 955 B1**
(45) Date de publication et mention de la délivrance du brevet: **20.11.2013**
(21) Numéro de dépôt: 10170696.8
(22) Date de dépôt: 23.07.2010
(51) Int. Cl.: H04L 29/08, H04L 29/06, H04N 7/173, H04N 21/262, H04N 21/2668, H04N 21/433, H04N 21/472, H04N 21/6583, H04N 21/647, H04N 5/44, H04N 5/781, H04N 21/6332

(54) **Procédé de diffusion de données numériques**
Verfahren zu Verteilung digitaler Daten
Method for distributing digital data

(30) Priorité: 24.07.2009 FR 0955222
(43) Date de publication de la demande: 02.03.2011
(73) Titulaire: Quadrille Ingénierie, 75002 Paris (FR)
(72) Inventeur: Battas, Xavier, 92100 Boulogne (FR); Sully, Jean-Luc, 75018 Paris (FR)
(74) Mandataire: Tanty, François

(56) Documents cités:
- EP-A- 2 061 228
- EP-A1- 1 936 517
- GB-A- 2 378 841
- US-A- 5 790 935
- US-A1- 2002 146 023
- US-A1- 2003 005 454
- US-A1- 2003 115 294
- US-A1- 2007 121 678
- US-A1- 2007 263 716

## Description

La présente invention a pour objet un procédé de diffusion de données numériques au sein d'un réseau de transmission de données, les données transmises comportant des données primaires et un contenu numérique additionnel.

L'invention s'applique plus particulièrement à la diffusion de contenu numérique additionnel multimédia, notamment de fichiers vidéo, par exemple des films de cinéma sortis récemment en salles et dont la visualisation nécessite le paiement par l'utilisateur d'un prix supplémentaire, de façon similaire à la VOD (*video on demand*).

Cette diffusion peut se faire dans un réseau unidirectionnel par exemple de télévision numérique terrestre ou de télévision par satellite, ou bidirectionnel normalement tel qu'internet, dans lequel les données primaires correspondent aux programmes télévisés diffusés.

Actuellement, les systèmes de VOD utilisent des transmissions en mode "*pull*", un contenu numérique étant diffusé sur requête des utilisateurs par des transmissions traditionnelles "point à point" entre un système émetteur et des récepteurs.

Un utilisateur choisit par exemple un contenu numérique additionnel dans un catalogue disponible auprès d'un fournisseur de services de VOD et le contenu peut être visualisé par l'utilisateur simultanément à sa diffusion ou en variante, être enregistré dans un espace de stockage numérique du récepteur et visualisé ultérieurement.

Un tel service de diffusion implique une architecture réseau relativement lourde et coûteuse et n'est généralement déployé que dans les grandes agglomérations, ce qui en limite l'accès.

Il existe un besoin pour permettre de diffuser de façon rapide, fiable et sécurisée un contenu numérique additionnel, par exemple de taille importante, dans un réseau de transmission de données dans lequel transitent déjà des données primaires, et ce d'autant plus que l'arrivée sur le marché de récepteurs dotés d'une grande capacité de stockage, par exemple supérieure à 160 Go, est susceptible d'accroître encore l'intérêt pour de tels contenus additionnels.

L'invention a pour but de répondre à ce besoin et elle y parvient, selon l'un de ses aspects, grâce à un procédé de diffusion de données numériques selon la revendication 1.

Grâce à l'invention, on utilise pour la diffusion du contenu numérique additionnel la bande passante disponible dans le réseau et non-utilisée pour la diffusion des données primaires, ce qui permet d'accroître la quantité de données diffusées sans avoir à augmenter la taille du réseau de transmission, notamment la bande passante utilisée, et sans saturer le réseau de transmission.

Le contenu numérique additionnel peut être diffusé dans le réseau à un débit déterminé en fonction de la bande passante disponible dans le réseau et non utilisée pour la diffusion des données primaires.

Dès lors que de la bande passante est disponible dans le réseau malgré la diffusion des données primaires, le contenu numérique additionnel peut être diffusé dans le réseau grâce à cette bande passante disponible, contrairement aux solutions connues selon lesquelles il est nécessaire d'attendre que la bande passante disponible atteigne une valeur prédéfinie avant de diffuser le contenu numérique additionnel. Selon l'invention, la diffusion du contenu numérique additionnel se produit indépendamment de la quantité de bande passante disponible dans le réseau.

Un même contenu numérique additionnel peut être diffusé vers tous les récepteurs du réseau.

La taille du fichier du contenu numérique additionnel n'est pas limitative, elle peut varier de quelques centaines d'octets à plus de 2Go.

La diffusion du contenu numérique additionnel dans le réseau peut ne pas nécessiter la présence d'un canal dédié, contrairement aux solutions connues décrites dans la demande US 2003/0115294. La bande passante disponible dans le réseau malgré la diffusion des données primaires peut ne pas être réservée ou allouée à un récepteur donné.

L'invention permet notamment d'optimiser l'exploitation de la bande passante du réseau, pouvant être déployée dans des réseaux unidirectionnels sans voie de retour, comme le réseau de télévision numérique terrestre ou de télévision par satellite. Par « réseau unidirectionnel », il faut comprendre selon l'invention un réseau dans lequel la communication ne peut être établie que du système émetteur vers les récepteurs, et non également des récepteurs vers le système émetteur. Comme exemple de réseau non unidirectionnel, on peut citer le réseau de télévision par internet (IPTV).

La diffusion du contenu numérique additionnel est effectuée indépendamment d'une requête préalable d'un utilisateur visant à obtenir le contenu numérique additionnel en retour. Une telle requête vise par exemple à obtenir le contenu numérique additionnel avant une date prédéfinie ou dans un délai à compter de l'émission de la requête inférieur à un ou plusieurs jours, notamment à une ou plusieurs heures, notamment une heure.

L'invention permet que le contenu numérique additionnel soit reçu par le récepteur, même en l'absence d'utilisation de ce dernier par un utilisateur. La diffusion du contenu numérique additionnel se fait en mode *«push* », notamment au sein d'un réseau de diffusion de type «point-multipoint », c'est-à-dire que la diffusion du contenu numérique additionnel n'a lieu qu'à l'initiative du système émetteur. La bande passante disponible peut ainsi être utilisée pour pousser le contenu numérique additionnel dans le réseau vers les récepteurs.

De cette façon, la diffusion du contenu numérique additionnel n'est avantageusement effectuée que lorsque le système émetteur est informé de la disponibilité temporaire de bande passante dans le réseau de transmission.

La diffusion du contenu numérique additionnel par le système émetteur est par exemple effectuée en fonction d'une prévision d'une disponibilité de bande passante (encore appelée fenêtre) dans le réseau de transmission liée à la diffusion des données primaires. La prévision provient par exemple d'un opérateur du réseau de transmission, notamment l'opérateur d'une ou plusieurs chaînes de télévision. En variante, cette fenêtre de diffusion est déterminée par le système émetteur, qui peut être dynamiquement asservi à la disponibilité de bande passante dans le réseau. Le système émetteur peut dans ce but être configuré pour détecter dans le réseau la bande passante disponible et pour remplacer les paquets de bourrage occupant cette bande passante disponible par des paquets véhiculant le contenu numérique additionnel. L'exploitation du réseau peut ainsi être optimisée ainsi que l'Average Revenue per User (ARPU).

Une fenêtre de diffusion du contenu numérique additionnel du fait de la libération de bande passante dans le réseau de transmission est par exemple de l'ordre de quelques minutes, de quelques dizaines de minutes ou encore de quelques heures. Cette fenêtre temporelle peut se répéter sensiblement d'un jour à l'autre ou en variante être réactualisée dynamiquement, par exemple à l'initiative d'un opérateur du réseau de transmission ou par le système émetteur, ce dernier effectuant alors une recherche dynamique de bande passante disponible.

Le système émetteur est par exemple configuré pour rechercher dans le réseau la bande passante disponible et non utilisée pour l'émission des données primaires et pour contacter l'opérateur du réseau de transmission pour se voir accorder la bande passante disponible trouvée pour l'émission du contenu numérique additionnel.

La fenêtre de diffusion peut être créée par un changement de transpondeur dans le cas de la télévision par satellite.

Selon un premier mode de mise en oeuvre de l'invention, le contenu numérique additionnel est diffusé dans le réseau de transmission avec un débit fixe durant la diffusion de ce contenu.

Selon un deuxième mode de mise en oeuvre de l'invention, le contenu numérique additionnel est diffusé dans le réseau de transmission de données de façon continue avec un débit variable, ce qui peut permettre d'adapter la diffusion du contenu à l'évolution de la disponibilité de la bande passante dans le réseau de transmission du fait de la diffusion des données primaires. Des données primaires ne sont par exemple pas émises la nuit et le débit de diffusion du contenu numérique additionnel est augmenté pendant cette période. C'est par exemple le cas de données primaires correspondant aux programmes diffusés sur une chaîne à l'attention des enfants, chaîne pour laquelle une interruption des programmes peut avoir lieu entre 1 h et 6h du matin par exemple.

Selon un autre mode de mise en oeuvre, le contenu numérique additionnel est diffusé dans le réseau de transmission de données de façon discontinue. La diffusion du contenu est par exemple poursuivie après une interruption dès que de la bande passante est à nouveau disponible dans le réseau, ce qui permet d'adapter encore plus finement la diffusion du contenu additionnel à la disponibilité du réseau du fait de la variabilité du flux de diffusion des données primaires.

La poursuite de la diffusion du contenu numérique additionnel s'effectue par exemple en ne diffusant que des paquets du contenu non encore diffusés, ce qui permet d'éviter de rediffuser tout le contenu déjà transmis au récepteur et d'encombrer inutilement le réseau de transmission.

L'interruption de la diffusion du contenu numérique additionnel n'est pas limitée dans le temps.

Le réseau de transmission est par exemple un réseau multicanal et le contenu numérique peut être diffusé en fonction de la bande passante disponible sur chaque canal, le contenu numérique additionnel étant par exemple diffusé sur un ou plusieurs canaux, le choix du canal pouvant s'effectuer en fonction de l'occupation de ce canal par les données primaires.

Après une interruption de la diffusion, le contenu numérique additionnel peut être diffusé sur au moins un canal différent du canal précédemment utilisé pour diffuser le contenu avant l'interruption, n'étant par exemple diffusé que sur des canaux différents de ceux utilisés avant l'interruption de la diffusion.

Le réseau de transmission peut comporter au moins deux sous-réseaux et la diffusion par le système émetteur du contenu numérique additionnel vers le récepteur peut être adaptée en fonction de la bande passante disponible dans chaque sous-réseau, la diffusion ne s'effectuant par exemple que dans un seul des sous-réseaux ou en variante en proportions différentes dans chacun des sous-réseaux.

Le récepteur comporte un espace de stockage numérique et le contenu numérique additionnel peut comporter des données relatives à la fraction de l'espace de stockage alloué au stockage du contenu numérique additionnel, ce qui permet que la répartition de l'espace de stockage du récepteur soit gérée depuis le système émetteur. Le récepteur peut être configuré pour être commandable à distance grâce à des données incluses dans le contenu numérique additionnel.

Le contenu numérique additionnel comporte des données relatives à la gestion dudit contenu par le récepteur et au moins une partie du contenu numérique peut être stockée ou effacée de l'espace de stockage numérique du récepteur en fonction desdites données, ce qui permet une gestion du contenu numérique additionnel stocké dans l'espace de stockage du récepteur par le système émetteur. Le système émetteur effectue des mises à jour du contenu numérique additionnel stocké dans l'espace de stockage de chaque récepteur. Cela permet de supprimer de la liste des fichiers consultables les plus anciens pour faire de la place aux nouveaux.

Le contenu numérique additionnel peut comporter des fichiers multimédia, notamment des films ou des clips vidéo, dans le cadre d'une utilisation pour la VOD.

Au moins un filtre d'acceptation des fichiers multimédia peut être appliqué par le récepteur en fonction d'un profil utilisateur et seuls les fichiers multimédia non rejetés par le filtre peuvent être stockés par le récepteur, ce qui permet que seuls les fichiers susceptibles d'intéresser l'utilisateur soient stockés dans le récepteur. Le ou les filtres sont par exemple paramétrés par l'utilisateur au moyen d'une interface utilisateur accessible à l'utilisateur. En variante, ce ou ces filtres sont paramétrés par une entité distincte de l'utilisateur, notamment à partir d'une étude de son comportement. Le paramétrage des filtres peut s'effectuer à distance, par exemple lors d'une connexion de l'utilisateur à un compte utilisateur, par internet par exemple.

Le réseau de transmission de données est le réseau de télévision numérique terrestre (TNT) ou le réseau de télévision par satellite. L'invention est particulièrement intéressante pour ces réseaux.

Le contenu numérique additionnel diffusé est par exemple un contenu multilingue, ce qui peut permettre que ce contenu ne soit transmis qu'une seule fois indépendamment de la langue de l'utilisateur. Cela est intéressant notamment dans le cas du réseau de télévision par satellite.
Le stockage du contenu numérique additionnel dans l'espace de stockage numérique, encore appelé « disque », d'un récepteur peut s'effectuer de façon transparente pour l'utilisateur du récepteur, c'est-à-dire que la récupération des données relatives au contenu numérique additionnel et le stockage sont effectués indépendamment d'une requête émise en ce sens par ce dernier dès lors que de la bande passante est disponible dans le réseau de transmission et que le contenu n'est pas rejeté par le ou les filtres mentionnés ci-dessus.

La récupération des données relatives au contenu numérique additionnel et le stockage dans l'espace de stockage du ou des récepteurs peuvent être effectués sans avoir à programmer le récepteur de façon à ce que ce dernier se mette en marche à une heure prédéfinie pour stocker ledit contenu.

Le contenu numérique additionnel transmis à un utilisateur est crypté, et stocké sur le récepteur selon une clé de chiffrement propre au récepteur.

Le récepteur comporte par exemple une sortie TV, notamment un connecteur de type video composite ou SVideo, HDMI ou toute autre sortie numérique.

Le récepteur comporte par exemple un disque dur interne, un disque dur externe ou une mémoire flash, étant par exemple un décodeur (*set top box* en anglais).

La diffusion du contenu numérique additionnel peut être effectuée indépendamment du réseau Internet. L'invention peut ainsi permettre de s'affranchir de l'emploi du réseau Internet.

L'invention a encore pour objet, selon un autre de ses aspects, un système de diffusion selon la revendication 12. .

Un tel système peut reprendre tout ou partie des caractéristiques du procédé de diffusion ci-dessus. Le système peut notamment être configuré pour transmettre le contenu numérique additionnel à un débit déterminé en fonction de la bande passante disponible dans le réseau et non utilisée pour la diffusion des données primaires.

L'invention pourra être mieux comprise à la lecture de la description qui va suivre, d'exemples non limitatifs de mise en oeuvre de celle-ci, et à l'examen du dessin annexé, sur lequel :
- la figure 1 représente de façon schématique un exemple de réseau de transmission de données selon l'invention,
- les figures 2a à 2c représentent différents exemples de diffusion d'un contenu numérique additionnel et,
- la figure 3 illustre le traitement par un récepteur d'un contenu numérique additionnel reçu par ce dernier,
- la figure 4 est une autre représentation schématique d'un réseau dans lequel peut être mise en oeuvre l'invention,
- les figures 5 à 9 sont des copies d'écran d'interface utilisateur de composants du système émetteur et,
- la figure 10 représente de façon schématique certaines étapes préalables à la diffusion du contenu numérique additionnel dans le réseau.

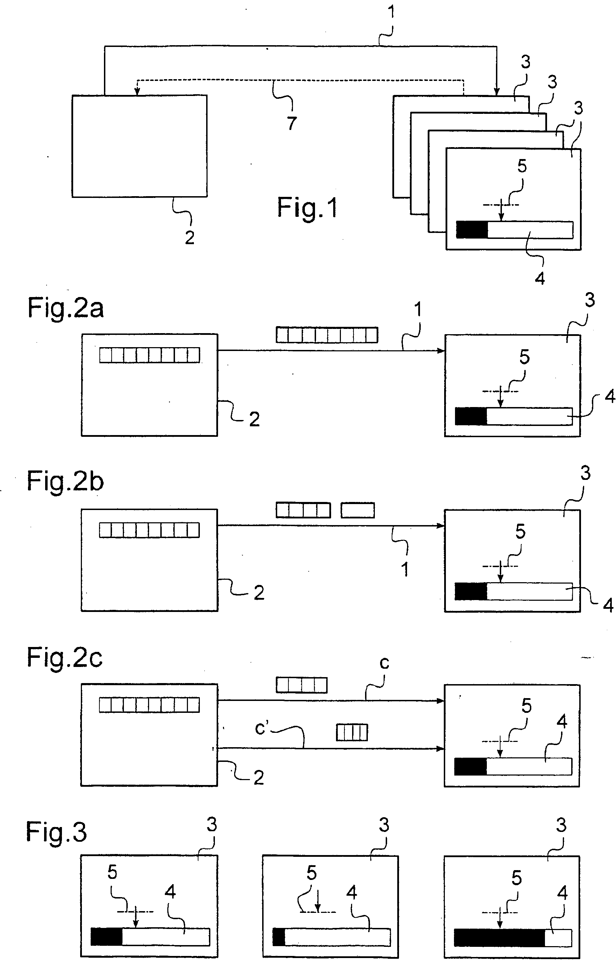

On a représenté à la figure 1 un réseau de transmission de données 1 selon un premier exemple de mise en oeuvre de l'invention. Ce réseau est par exemple un réseau de télévision numérique terrestre (TNT), de télévision par satellite ou de télévision par internet (IPTV). Le réseau 1 est par exemple un réseau multicanal. Le réseau de transmission 1 comporte un système émetteur 2 et une pluralité de récepteurs 3.

Des données primaires sont transmises par le réseau 1, par exemple des programmes de chaînes télévisées, et du contenu numérique additionnel est également transmis. Ce contenu comporte des fichiers multimédia tels que des films, de tels fichiers étant par exemple des contenus multilingues. Ces fichiers peuvent être au format MPEG2, H264, SD ou HD. Le contenu numérique additionnel peut encore comprendre des fichiers tels que des guides programmes électroniques (en anglais EPG), de la publicité ou des jeux vidéo.

Lorsque le contenu numérique additionnel comprend des fichiers multimédia, il peut encore comprendre des images associées à d'autres fichiers multimédia d'un catalogue disponible dans le réseau et/ou une amorce de début de bande (*trailer* en anglais) et/ou une bande annonce, notamment d'un fichier multimédia présent dans le contenu numérique additionnel.

Le contenu numérique additionnel comporte également dans l'exemple décrit des données relatives à la gestion du contenu par le récepteur 3, la réception de ces données par le récepteur provoquant le stockage ou l'effacement dans l'espace de stockage du récepteur de fichiers en fonction desdites données. Des données descriptives sont par exemple associées à chaque fichier du contenu numérique additionnel, ces données comportant par exemple, lorsque le fichier est un film, le titre, le genre, l'auteur, les acteurs, une date de production, un résumé, la langue, la durée du film, des directives parentales ou encore une date de début et/ou une date de fin de vie du fichier au-delà de laquelle celui-ci sera par exemple effacé de l'espace de stockage du récepteur.

Un paramètre définissant le nombre maximum de lecture d'un fichier pourra également être associé à ce dernier.

Le contenu numérique additionnel est transmis de façon cryptée, et l'enregistrement met en oeuvre un chiffrement local, consistant à chiffrer un fichier avec une clé de chiffrement spécifique à chaque récepteur, comme par exemple décrit dans le brevet FR 2 846 831.

Le système émetteur 2 est dans l'exemple décrit un fournisseur de services, par exemple une chaîne de télévision ou tout opérateur fournissant de la vidéo à la demande.

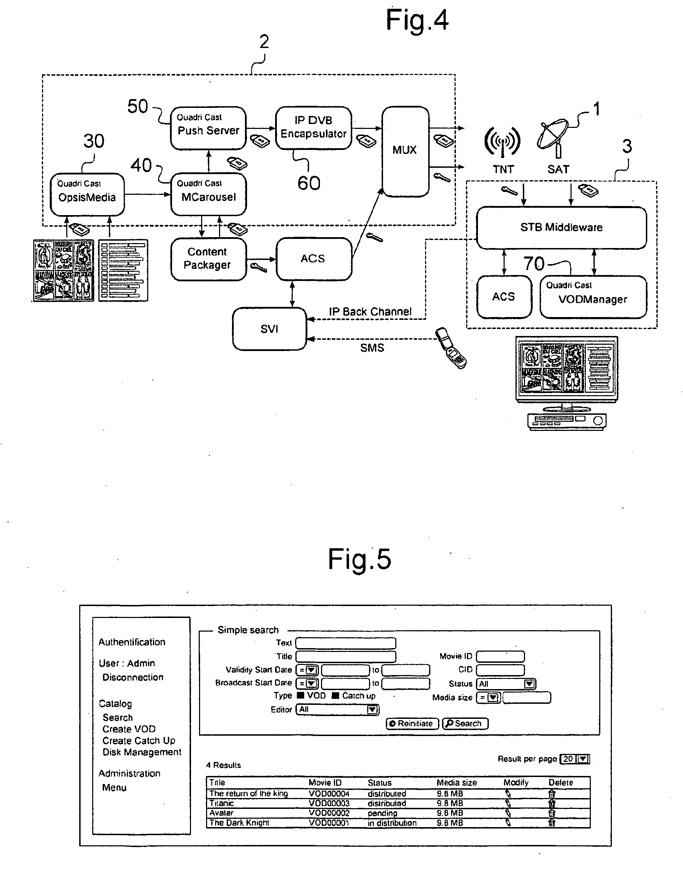

Le système émetteur 2 est représenté plus en détail à la figure 4. Le système émetteur 2 comprend comme on peut le voir un gestionnaire de contenu 30, un gestionnaire d'envoi 40 et un serveur 50.

Le gestionnaire de contenu 30 est par exemple accessible à travers un navigateur Web et peut présenter tout ou partie des fonctionnalités suivantes :
- indexation des documents, cette fonctionnalité permettant de saisir des données descriptives associées à un ou plusieurs fichiers multimédia,
- gestion des données, cette fonctionnalité permettant par exemple de combiner des fichiers multimédia, par exemple vidéo, supplémentaires avec un fichier multimédia, par exemple vidéo,
- gestion de documents associés, cette fonctionnalité permettant par exemple lorsque l'on cherche à diffuser un fichier vidéo d'y associer des textes ou des photos dans des formats différents, par exemple PDF, JPEG, text ou autres,
- gestion du catalogue, cette fonctionnalité mettant par exemple en oeuvre un module d'administration recensant dans des listes les fichiers proposés,
- gestion d'édition, cette fonctionnalité permettant d'associer des données telles qu'un niveau de priorité au fichier multimédia que l'on cherche à diffuser,
- gestion des droits, cette fonctionnalité permettant d'indiquer des paramètres commerciaux nécessaires du point de vue de la diffusion du fichier multimédia, par exemple son prix et sa disponibilité en fonction de la date ou du public visé, pour éviter par exemple que des enfants par exemple ne reçoivent un contenu numérique additionnel réservé à un public adulte,
- gestion de l'espace de stockage numérique d'un ou plusieurs récepteurs 3, cette fonctionnalité étant décrite ci-après.

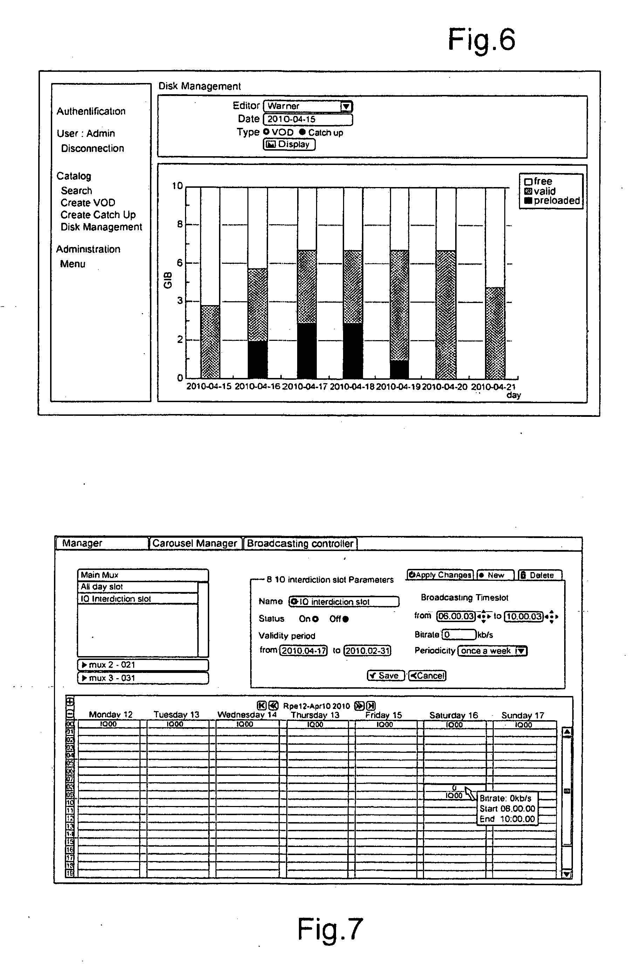

Ce gestionnaire de contenu peut être accessible via une interface utilisateur dont la langue et/ou l'alphabet peuvent être sélectionnables. Les figures 5 et 6 sont des copies d'écran lorsque des exemples d'une telle interface utilisateur sont visualisés.

Le gestionnaire d'envoi 40 est un programme configuré pour prévoir la transmission du contenu numérique additionnel en fonction de la bande passante disponible dans le réseau et non utilisée pour la transmission des données primaires.

La bande passante disponible dans le réseau est par exemple connue du système émetteur 2 grâce à un renseignement fourni par un opérateur du réseau. En variante, le gestionnaire d'envoi 40 est configuré pour rechercher dynamiquement toute bande passante non utilisée dans le réseau pour la transmission des données primaires. Le fonctionnement du gestionnaire d'envoi 40 peut être paramétré en définissant pour une fenêtre de diffusion le contenu à émettre, le débit selon lequel le contenu doit être émis et, le cas échéant, l'évolution de ce débit au cours du temps. Ce paramétrage du gestionnaire d'envoi 40 peut également comprendre la définition de conditions de réémission du contenu numérique additionnel en cas d'échec, des conditions d'arrêt de la diffusion du contenu, d'un niveau de priorité associé à ce contenu numérique additionnel.

On a représenté aux figures 7 à 9 des copies d'écran lorsque l'on visualise un exemple d'interface utilisateur d'un gestionnaire d'envoi 40 selon un exemple de mise en oeuvre de l'invention.

Le serveur 50 est dans l'exemple considéré agencé pour fonctionner en mode « push » pour diffuser le contenu numérique additionnel dans le réseau. Cette émission met par exemple en oeuvre le protocole VFDP V2. On peut par exemple accéder au serveur 50 par l'intermédiaire d'une interface de programmation (API) à laquelle peut accéder le gestionnaire d'envoi 40 pour contrôler les tâches effectuées par le serveur 50.

Le débit selon lequel le contenu numérique additionnel est émis par le serveur 50 peut être ajusté de façon dynamique, notamment en temps réel. L'émission du contenu numérique additionnel peut être interrompue ou reprise.

Lorsque le réseau de transmission est un réseau DVB, le contenu numérique additionnel émis par le serveur 50 peut se présenter sous la forme de paquets IP qui sont encapsulés par un module 60 dans des paquets TS encapsulant selon le protocole MPE.

Les récepteurs 3 sont par exemple des décodeurs, encore appelés en anglais « *set top box* » (STB) et comportent un disque dur interne ou externe ou autre mémoire de masse définissant un espace de stockage numérique 4 d'une capacité comprise par exemple entre 160 Go et 250 Go, cette plage n'étant pas limitative. Ces récepteurs peuvent être à disque dur interne, externe ou à mémoire flash.

Les récepteurs peuvent comporter des moyens de sortie fournissant de la vidéo et de l'audio numérique ou analogique, par exemple un connecteur HDMI.

Le réseau 1 est par exemple un réseau unidirectionnel dépourvu d'une voie de retour permettant au récepteur d'envoyer des informations à l'émetteur. En variante, le réseau 1 comporte une telle voie de retour 7.

Les récepteurs 3 peuvent comporter, comme représenté à la figure 3, un ou plusieurs filtres 5 qui ont par exemple été paramétrés par l'utilisateur du récepteur 3 en fonction d'informations d'un profil utilisateur, ces filtres permettant à l'utilisateur de n'accepter, parmi des fichiers du contenu numérique additionnel reçu depuis le système émetteur 2, que ceux en rapport avec ses centres d'intérêt. Lorsque qu'un fichier n'est pas rejeté par le ou les filtres 5, ce fichier peut être enregistré dans l'espace de stockage 4 du récepteur, notamment après avoir été préalablement déchiffré.

Une fraction de l'espace de stockage numérique est dédiée au stockage d'un contenu numérique additionnel, cette fraction pouvant varier d'un récepteur 3 à l'autre, comme visible sur la figure 3.

Le récepteur 3 peut comporter une interface utilisateur comportant par exemple des moyens permettant d'afficher une liste de fichiers issus du contenu numérique additionnel reçu et des moyens pour modifier des paramètres relatifs à la réception du contenu numérique additionnel et/ou pour sélectionner des fichiers ainsi réceptionnés. L'interface utilisateur peut comporter une interface graphique de type HTML, BLUESTREAK, FLASH ou autre. Seuls les fichiers valides, c'est-à-dire associés à une date de validité non dépassée, peuvent être affichés sur cette interface graphique.

Le récepteur 3 comporte par exemple un module 70 se présentant sous la forme d'un logiciel préalablement téléchargé et permettant de reconstituer les contenus envoyés par le serveur 50. Ces contenus peuvent avoir été transmis au récepteur 3 en plusieurs fois puisque la bande passante n'était pas suffisante pour permettre la transmission en une seule fois du contenu numérique additionnel. Le module 70 coopère par exemple avec le gestionnaire de contenu 30 dans le cadre de la fonctionnalité de gestion de l'espace de stockage numérique du récepteur 3.

L'interface utilisateur peut comporter par exemple un écran et un clavier. L'écran est par exemple celui avec lequel sont visualisés les programmes. Le clavier fait par exemple office de télécommande. En variante, l'interface utilisateur peut comporter des moyens de reconnaissance vocale.

L'utilisateur du récepteur 3 peut, grâce à l'interface utilisateur, visualiser tout ou partie des fichiers disponibles dans l'espace de stockage du récepteur 3 ainsi que des données relatives à la gestion de chaque fichier du contenu numérique additionnel. Ces données peuvent permettre une gestion quotidienne de fichiers diffusés par le réseau de transmission, par exemple une gestion tous les jours, à une heure paramétrable, des fichiers. Le récepteur 3 comporte par exemple une unité de traitement comportant par exemple une ou plusieurs cartes électroniques et configurées pour procéder à un effacement des fichiers dont la date de fin de vie est dépassée ou des fichiers les plus anciennement enregistrés et n'ayant par exemple pas été visualisés depuis une durée prédéterminée.

Les données relatives à la gestion du contenu peuvent encore provoquer l'effacement total des fichiers enregistrés dans l'espace de stockage numérique du récepteur.

L'utilisateur peut par exemple agir sur l'interface utilisateur pour modifier la langue d'un fichier reçu. En variante, l'interface utilisateur peut permettre à l'utilisateur de modifier les paramètres du ou des filtres décrits ci-dessus. L'interface utilisateur peut également être configurée pour permettre à un utilisateur de visualiser un fichier reçu, un bandeau présentant à l'utilisateur le numéro du fichier et un identifiant que ce dernier devra transmettre à un centre de services, par exemple via un serveur vocal interactif, pour obtenir les droits de visualisation du fichier, étant par exemple affiché sur l'écran de l'interface utilisateur.

Chaque récepteur 3 peut, selon un exemple de mise en oeuvre de l'invention, être relié à une voie de retour véhiculant les transactions utilisateur à un centre de services jouant le rôle de serveur vocal interactif mentionné ci-dessus. Ce dernier pourra utiliser cette voie de retour ou, en variante le réseau de transmission, pour acheminer les droits de consommation à l'utilisateur. La voie de retour comporte par exemple une connexion à Internet.

On va maintenant décrire en référence à la figure 2, plusieurs exemples de diffusion de contenus numériques additionnels dans le réseau 1.

La diffusion du contenu numérique additionnel par le système émetteur 2 est par exemple effectuée en fonction d'une prévision de disponibilité de bande passante dans le réseau de transmission, liée à la diffusion des données primaires. Ces prévisions sont par exemple communiquées au système émetteur, via une interface dédiée, par un exploitant du réseau de transmission. En variante, cette prévision est effectué par un opérateur du système émetteur par consultation du guide programme électronique (EPG en anglais).

Lorsque le réseau de transmission est le réseau TNT, la prévision prend en compte les périodes pendant lesquelles certaines chaînes n'émettent pas. La prévision est par exemple réactualisée à l'initiative de l'exploitant du système de transmission ou en variante par le système émetteur lui-même. Toujours dans le cas où le réseau est le réseau TNT, la prévision peut concerner chacun des multiplex du réseau et de la bande passante disponible peut être allouée à la diffusion du contenu numérique additionnel pour chaque multiplex.

Dans le cas où le réseau de transmission est le réseau de télévision par satellite, la prévision peut concerner plusieurs transpondeurs.

La diffusion du contenu numérique additionnel correspond par exemple à une fenêtre temporelle de l'ordre de la minute, par exemple de plusieurs dizaines de minutes. En variante, la fenêtre temporelle de ladite diffusion peut être de l'ordre de plusieurs heures.

Dans l'exemple de la figure 2a, la bande passante disponible dans le réseau 1 du fait de la diffusion des données primaires permet au système émetteur 2 de diffuser le contenu numérique additionnel, notamment un fichier vidéo, en une seule fois à un débit fixe pendant la fenêtre temporelle.

Dans l'exemple de la figure 2b, la bande passante disponible dans le réseau 1 provoque la diffusion par le système émetteur 2 du contenu numérique additionnel, notamment du fichier vidéo, en une seule fois mais à un débit variable en fonction de la bande passante libérée dans le réseau.

Dans l'exemple de la figure 2c, la diffusion du contenu numérique additionnel est effectuée de façon discontinue, celle-ci étant interrompue du fait de la non-disponibilité de bande passante dans le réseau alors qu'un certain nombre de paquets a déjà été diffusé. L'interruption peut être de l'ordre de quelques minutes, de plusieurs heures, voire de plusieurs jours. La diffusion du contenu numérique est par exemple reprise lorsque de la bande passante est à nouveau disponible dans le réseau de transmission.

Dans l'exemple de la figure 2c, les paquets sont transmis sur un canal c avant l'interruption et, lors de la reprise de la diffusion, ces paquets sont transmis par un autre canal c', mais on ne sort pas du cadre de la présente invention lorsque la reprise de la diffusion s'effectue par le même canal qu'avant l'interruption.

Dans une autre variante, le réseau comporte deux sous-réseaux et la diffusion s'effectue via un seul des réseaux ou en proportions différentes via chacun des réseaux en fonction de la bande passante disponible dans chacun de ces sous-réseaux.

A la reprise, seuls les paquets non encore transmis au récepteur sont par exemple envoyés à ce dernier.

A la fin de la transmission d'un fichier multimédia, le système émetteur 2 peut, en fonction de la bande passante disponible dans le réseau de transmission, transmettre un nouveau fichier multimédia à un ou plusieurs récepteurs 3. En variante, le système émetteur 2 peut diffuser à nouveau le même contenu numérique additionnel dans le réseau de transmission, par exemple à nouveau le même fichier, en fonction d'objectifs de qualité de services à atteindre, de contrainte technique et/ou de la topologie du réseau de transmission, par exemple de la notion de perte de paquets.

En variante, une fois un contenu numérique additionnel diffusé, le système émetteur 2 peut se mettre en attente. On va maintenant décrire une séquence de chargement et de diffusion d'un contenu numérique additionnel dans le réseau représenté sur la figure 4. Le réseau est par exemple un réseau de télévision numérique terrestre, comme le réseau DTT, SAT, ou un réseau IP MPLS.

Le chargement d'un contenu numérique additionnel dans le système émetteur 2 peut s'effectuer pour chaque fournisseur de contenu via une connexion sécurisée depuis un serveur FTP, par exemple. Le contenu chargé peut comprendre, outre un ou plusieurs fichiers multimédia, des métadonnées associées à ce ou ces fichiers multimédia. Le fournisseur de contenu peut recevoir un message d'acquittement lorsque le contenu a bien été chargé dans le système émetteur 2. Le cas échéant, le contenu chargé a une date de validité déjà expirée ou dont l'expiration est proche et un message invitant le fournisseur de contenu à la modifier peut être envoyé. Le contenu ainsi chargé peut ensuite être publié par le gestionnaire de contenu 30, soit automatiquement à la date de publication figurant dans le contenu chargé, soit manuellement lorsqu'aucune date de publication ne figure dans ce contenu chargé.

Le contenu chargé peut ensuite être mis en forme par le gestionnaire d'envoi 40 en vue de sa diffusion dans le réseau par le serveur 50. Cette étape de mise en forme consiste par exemple à crypter le ou les fichiers multimédia présents dans le contenu numérique additionnel et à regrouper au sein dudit contenu tous les autres fichiers mentionnés ci-dessus qui peuvent être associés au(x) fichier(s) multimédia.

La diffusion dans le réseau de ce contenu numérique additionnel peut s'effectuer en fonction de plusieurs critères, ces derniers étant l'un au moins parmi le niveau de priorité associé au contenu numérique additionnel, un accord entre la disponibilité en bande passante et les ressources réseau nécessitées par la diffusion du contenu et la taille du contenu numérique additionnel.

L'interface utilisateur du gestionnaire de contenu 30 ou du gestionnaire d'envoi 40 peut afficher lors de la diffusion du contenu des informations relatives à cette diffusion, par exemple le débit de cette diffusion ou un identifiant associé à ce contenu.

Lors de la diffusion du contenu numérique additionnel, le débit selon lequel la diffusion a lieu peut être modifié de façon dynamique, comme expliqué ci-dessus. Lorsque plus aucune bande passante n'est disponible pour la diffusion du contenu numérique additionnel, cette dernière peut être interrompue et reprendre une fois de la bande passante à nouveau disponible et non utilisée pour la diffusion des données primaires, le cas échéant en utilisant un autre multiplex. La reprise de la diffusion du contenu numérique additionnel ne porte dans l'exemple décrit que sur des paquets du contenu non encore émis.

Le module 70 peut fonctionner en continu ou non. Ce module est par exemple configuré pour écouter dans le réseau les messages annonçant le transfert de contenu numérique additionnel, ces derniers étant distribués par tout ou partie des multiplex du réseau. Dès lors que la diffusion d'un nouveau contenu numérique additionnel est annoncée, le module 70 peut analyser le message d'annonce afin de déterminer si le récepteur 3 dont il fait partie est concerné par ce contenu numérique additionnel.

Cette détermination repose par exemple sur l'un au moins des critères suivants:
- l'appartenance du récepteur à une liste de diffusion du contenu numérique additionnel, dans le cas où cette dernière existe et où le contenu numérique additionnel n'est pas destiné à être diffusé à tous les récepteurs 3 du réseau,
- de la non-réception antérieure de ce contenu numérique additionnel,
- de la concordance entre des mots clés associés à ce contenu numérique additionnel et au(x) filtre(s) 5 décrits ci-dessus,
à la présence de place suffisante sur l'espace de stockage numérique du récepteur pour enregistrer ce contenu, le cas échéant après effacement de cet espace mémoire des fichiers multimédia dont la date de validité est dépassée.. Cet effacement est par exemple effectué sur ordre de ce module 70. Lors de l'effacement de fichiers multimédia, tous les autres fichiers faisant partie du contenu numérique additionnel et associés aux fichiers multimédia, comme par exemple des dossiers XML, peuvent aussi être effacés de l'espace de stockage numérique du récepteur 3.La visualisation par l'utilisateur du récepteur des fichiers multimédia diffusés dans le contenu numérique additionnel est par exemple conditionnée à la souscription par l'utilisateur d'un abonnement, à l'utilisation par l'utilisateur de jetons dont un nombre prédéfini lui a préalablement été attribué ou encore à un paiement à la demande. Cette dernière possibilité peut nécessiter la présence d'une voie de retour dans le réseau, cette voie de retour étant par exemple réalisée via internet ou via un réseau téléphonique.

La diffusion d'un contenu numérique additionnel à un récepteur 3 peut être, comme expliqué ci-dessus, précédée d'un message d'annonce qui est par exemple de type VFDP et qui est envoyé par le serveur 50. Ce message d'annonce peut comporter des instructions pour le récepteur en rapport avec le début, la fin, la suspension et la reprise de la diffusion du contenu numérique additionnel. Pour chaque nouveau contenu numérique additionnel dont la diffusion dans le réseau va être entreprise, le message d'annonce peut comprendre des informations telles que la longueur du fichier multimédia, un mot clé, une liste de diffusion et, lorsque le réseau comporte plusieurs canaux, le canal utilisé pour l'envoi de messages de transport.

Ces messages d'annonces peuvent être diffusés sur un canal spécifique, par exemple associé à une adresse ou un port multicast ou à un identifiant PID/TSID.

Des messages de transport peuvent être émis par le serveur 50 pour diffuser la charge utile La taille et le débit de ces messages de transport peuvent être déterminés par le serveur 50 en fonction de paramètres d'application et le débit de ces messages de transport peut être modifié lors de la diffusion Similairement aux messages d'annonces, les messages de transport peuvent être diffusés sur un canal spécifique obtenu grâce aux messages d'annonce, ce canal spécifique étant par exemple associé à une adresse ou un port multicast ou à un identifiant PID/TSID.

Dès lors que la diffusion du contenu numérique additionnel par le système émetteur 2 a commencé, le récepteur 3 peut écouter sur le canal utilisé pour l'envoi des messages d'annonce. Lorsqu'un message d'annonce concerne le récepteur, ce dernier peut reconstruire le contenu numérique additionnel reçu en enregistrant et en réarrangeant les paquets reçus.

Comme déjà mentionné, le contenu numérique additionnel peut être annoncé grâce à des mots clés, ce qui peut permettre au récepteur de s'assurer que les fichiers reçus correspondent bien aux mots-clés précédemment reçus.

Les messages d'annonce et de transport peuvent être envoyés via la liaison descendante et le flux peut correspondre à une adresse IP multicast.

Dans le cadre de la diffusion du contenu numérique additionnel, le serveur 50 envoie par exemple des messages VFDP et des paquets UDP ou TCP sur une adresse multicast. L'emploi du mode TCP peut permettre d'asservir le débit de la diffusion aux valeurs maximales disponibles du côté encapsulateur MPE.

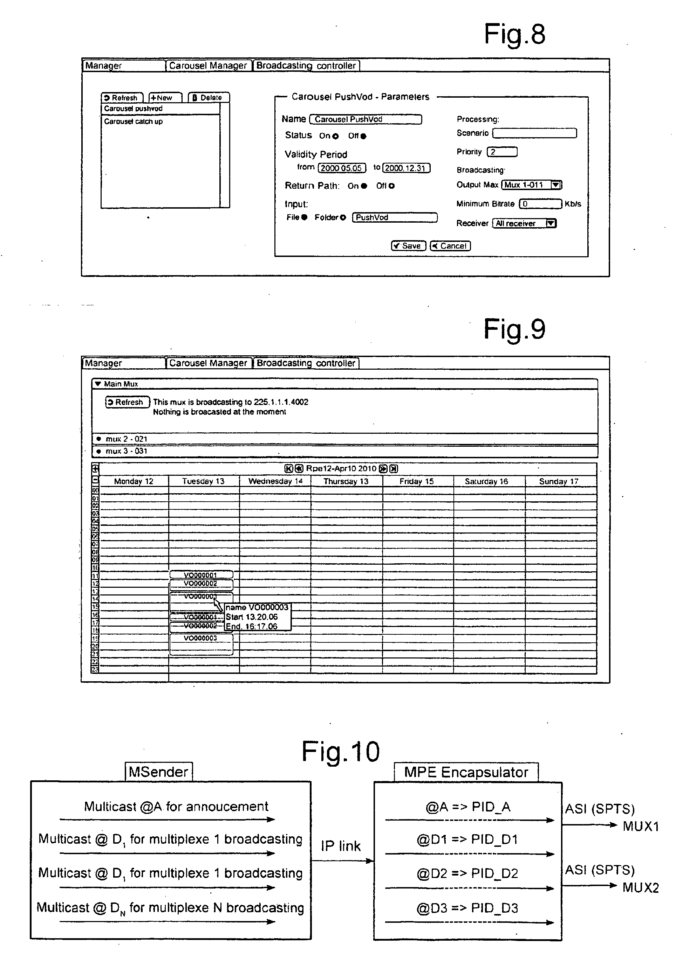

Comme représenté sur la figure 10, un référencement peut être effectué entre une adresse multicast et un couple multiplex/PID, ce qui peut permettre de diffuser des paquets sur différents multiplex afin d'optimiser la bande passante disponible.

On va maintenant donner un exemple de réalisation de composants du système émetteur 2. Le gestionnaire de contenu 30 et le gestionnaire d'envoi 40 peuvent être réalisés à l'aide de serveurs web APACHE® en php, un serveur APACHE TOMCAT® et une base de donnée MySQL selon les versions suivantes :
- serveur web APACHE® version 1.3,
- serveur APACHE TDMCAT® version 6,
- php version 5,
- MySQL version 4.

Le système d'exploitation des serveurs est par exemple LINUX®.

Les serveurs ci-dessus sont par exemple des serveurs HP DL 380 G5 Intel® Xeon® quad core 3,16 GHz, 2U, 4Go RAM DD 500 Go.

Le serveur 50 a par exemple un système d'exploitation WINDOWS® et ce serveur est par exemple un serveur HP DL 360 G5 INTEL® XEON® quad core 2,33 GHz, 1U, 2Go RAM DD 150 Go.

Les serveurs peuvent être redondants. Le gestionnaire de contenu 30 et le gestionnaire d'envoi 40 peuvent des applications « hot-plug » sur ces serveurs.

En cas d'échec de la diffusion du contenu numérique additionnel par le serveur 50, le gestionnaire d'envoi 40 peut demander à un serveur back-up de prendre en charge la diffusion dudit contenu.

L'expression « comportant un » doit être comprise comme signifiant « comportant au moins un », sauf lorsque le contraire est spécifié.

## Revendications

1. Procédé de diffusion d'un contenu numérique au sein d'un réseau unidirectionnel de transmission de données vidéo, le réseau étant un réseau de télévision numérique terrestre ou de télévision par satellite, le réseau comportant un système émetteur et une pluralité de récepteurs, comportant un espace de stockage numérique, le contenu numérique comportant des données primaires émises avec une quantité variable libérant de la bande passante de façon temporaire, procédé **caractérisé par le fait qu'**un contenu numérique additionnel est transmis depuis le système émetteur vers au moins un récepteur en utilisant au moins de la bande passante temporairement libérée, ledit contenu numérique additionnel étant stocké localement dans au moins un récepteur,
**par le fait que** le contenu numérique additionnel comporte des fichiers multimédia et des données relatives à la gestion dudit contenu par le récepteur, **par le fait qu'**au moins une partie du contenu numérique additionnel est effacé de l'espace de stockage numérique du récepteur en fonction desdites données relatives, **par le fait que** le contenu numérique additionnel transmis à un utilisateur est crypté et stocké sur le récepteur selon une clé de chiffrement propre au récepteur et **par le fait que** la diffusion du contenu numérique additionnel s'effectue indépendamment d'une requête préalable visant à obtenir le contenu numérique additionnel en retour, le système émetteur effectuant des mises à jour du contenu numérique additionnel stocké dans l'espace de stockage de chaque récepteur en permettant de supprimer de la liste desdits fichiers multimedia les plus anciens pour faire de la place aux nouveaux

2. Procédé selon la revendication 1, dans lequel le contenu numérique additionnel est diffusé dans le réseau de transmission avec un débit fixe durant la diffusion du contenu numérique additionnel.

3. Procédé selon la revendication 1, dans lequel le contenu numérique additionnel est diffusé dans le réseau de transmission de données de façon continue avec un débit variable.

4. Procédé selon la revendication 1, dans lequel le contenu numérique additionnel est diffusé dans le réseau de transmission de données de façon discontinue et dans lequel, en cas d'interruption, la diffusion du contenu est poursuivie après réception d'une information relative à la bande passante temporairement libérée dans ledit réseau.

5. Procédé selon la revendication précédente, dans lequel la poursuite de la diffusion du contenu numérique additionnel s'effectue en ne diffusant que des paquets du contenu non encore diffusés.

6. Procédé selon l'une quelconque des revendications précédentes, dans lequel le réseau est multicanal est dans lequel le contenu numérique additionnel est diffusé en fonction de la bande passante temporairement libérée pour chaque canal.

7. Procédé selon les deux revendications immédiatement précédentes; dans lequel la poursuite de la diffusion dans le réseau s'effectue sur au moins un canal différent du ou des canaux utilisés pour diffuser le contenu avant l'interruption.

8. Procédé selon l'une quelconque des revendications précédentes, dans lequel le contenu numérique additionnel comporte des données relatives à la fraction de l'espace de stockage à allouer au stockage du contenu numérique additionnel.

9. Procédé selon la revendication précédente, dans lequel au moins un filtre d'acceptation des fichiers multimédia est appliqué par le récepteur en fonction d'un profil utilisateur, et dans lequel seuls les fichiers multimédia non rejetés par le filtre sont stockés par le récepteur.

10. Procédé selon l'une quelconque des revendications précédentes, dans lequel le réseau de transmission de données comporte au moins deux sous-réseaux et dans lequel la diffusion par le système émetteur du contenu numérique additionnel vers le récepteur est adaptée en fonction de la bande passante disponible dans chaque sous-réseau.

11. Procédé selon l'une quelconque des revendications précédentes, le système émetteur étant dynamiquement asservi à la libération temporaire de la bande passante dans le réseau.

12. Système de diffusion d'un contenu numérique additionnel d'au moins un système émetteur vers au moins un récepteur, comportant un espace de stockage numérique, dans au moins un réseau unidirectionnel de transmission de données, le réseau étant un réseau de télévision numérique terrestre ou de télévision par satellite, les données transmises comportant des données primaires émises avec un débit variable libérant de la bande passante de façon temporaire, le système étant **caractérisé par le fait qu'**il est agencé pour transmettre un contenu numérique additionnel depuis le système émetteur vers au moins un récepteur en utilisant la bande passante temporairement libérée, et pour stocker ledit contenu numérique additionnel localement dans au moins un récepteur,
système **caractérisé par le fait que** le contenu numérique additionnel comporte des fichiers multimédia et des données relatives à la gestion dudit contenu par le récepteur, **par le fait qu'**au moins une partie du contenu numérique additionnel est effacé de l'espace de stockage numérique du récepteur en fonction desdites données relatives, **par le fait que** le contenu numérique additionnel transmis à un utilisateur est crypté et stocké sur le récepteur selon une clé de chiffrement propre au récepteur, et **par le fait que** la diffusion du contenu numérique additionnel s'effectue indépendamment d'une requête préalable visant à obtenir le contenu numérique additionnel en retour, effectuant des mises à jour du contenu numérique additionnel stocké dans l'espace de stockage de chaque récepteur en permettant de supprimer de la liste desdits fichiers multimedia les plus anciens pour faire de la place aux nouveaux

## Patentansprüche

1. Verfahren zum Verbreiten eines digitalen Inhalts innerhalb eines unidirektionalen Netzwerks zur Übertragung von Videodaten, wobei das Netzwerk ein digitales terrestrisches Fernsehnetzwerk oder ein Satellitenfernsehnetzwerk ist und ein Sendersystem und mehrere Empfänger umfasst, die einen digitalen Speicherraum enthalten, und wobei der digitale Inhalt primäre Daten enthält, die unter temporärer Freigabe von Bandbreite in variabler Menge ausgesandt werden,
**dadurch gekennzeichnet, dass** unter Verwendung zumindest der temporär freigegebenen Bandbreite vom Sendersystem zu mindestens einem Empfänger ein zusätzlicher digitaler Inhalt übertragen wird, der lokal in mindestens einem Empfänger gespeichert wird,
der zusätzliche digitale Inhalt Multimediadateien und Daten mit Bezug auf die Verwaltung des genannten Inhalts durch den Empfänger enthält, mindestens ein Teil des zusätzlichen digitalen Inhalts in Abhängigkeit von den mit Bezug versehenen Daten aus dem digitalen Speicherraum des Empfängers gelöscht wird, der zu einem Benutzer hin übertragene zusätzliche digitale Inhalt nach einem dem Empfänger gehörenden Schlüssel verschlüsselt und beim Empfänger gespeichert wird und die Verbreitung des zusätzlichen digitalen Inhalts unabhängig von einer vorhergehenden Anforderung, den zusätzlichen digitalen Inhalt zurückzuerhalten, bewirkt wird, und
das Sendersystem Aktualisierungen des zusätzlichen digitalen Inhalts bewirkt, der im Speicherraum eines jeweiligen Empfängers gespeichert ist, indem es ein Streichen der ältesten aus der Liste der Multimediadateien erlaubt, um Platz für neue zu schaffen.

2. Verfahren nach Anspruch 1, in dem der zusätzliche digitale Inhalt im Übertragungsnetzwerk mit einer während der Verbreitung des zusätzlichen digitalen Inhalts festen Bitrate verbreitet wird.

3. Verfahren nach Anspruch 1, in dem der zusätzliche digitale Inhalt in dem Netzwerk zur Übertragung von Daten kontinuierlich mit variabler Bitrate verbreitet wird.

4. Verfahren nach Anspruch 1, in dem der zusätzliche digitale Inhalt im Netzwerk zur Übertragung von Daten diskontinuierlich verbreitet wird und bei einer Unterbrechung die Verbreitung des Inhalts nach Empfang einer Information mit Bezug auf die temporär freigegebene Bandbreite im Netzwerk wieder aufgenommen wird.

5. Verfahren nach dem vorhergehenden Anspruch, in dem die Wiederaufnahme der Verbreitung des zusätzlichen digitalen Inhalts bewirkt wird, indem lediglich Pakete mit noch nicht verbreitetem Inhalt verbreitet werden.

6. Verfahren nach einem der vorhergehenden Ansprüche, in dem das Netzwerk mehrere Kanäle aufweist und der zusätzliche digitale Inhalt in Abhängigkeit der für jeden Kanal temporär freigegebenen Bandbreite verbreitet wird.

7. Verfahren nach den beiden unmittelbar vorhergehenden Ansprüchen, in dem die Wiederaufnahme der Verbreitung im Netzwerk auf mindestens einem anderen Kanal als dem oder den zur Verbreitung des Inhalts vor der Unterbrechung verwendeten bewirkt wird.

8. Verfahren nach einem der vorhergehenden Ansprüche, in dem der zusätzliche digitale Inhalt Daten mit Bezug auf die Aufteilung des dem Speichern des zusätzlichen digitalen Inhalts zugewiesenen Speichers enthält.

9. Verfahren nach dem vorhergehenden Anspruch, in dem vom Empfänger in Abhängigkeit von einem Benutzerprofil mindestens ein Akzeptanzfilter für die Multimediadateien angewandt wird und vom Empfänger lediglich die nicht vom Filter zurückgewiesenen Multimediadateien gespeichert werden.

10. Verfahren nach einem der vorhergehenden Ansprüche, in dem das Netzwerk zur Übertragung von Daten mindestens zwei Teilnetzwerke umfasst und die Verbreitung des zusätzlichen digitalen Inhalts durch das Sendersystem zu dem Empfänger in Abhängigkeit von der im jeweiligen Teilnetzwerk verfügbaren Bandbreite angepasst wird.

11. Verfahren nach einem dem vorhergehenden Ansprüche, wobei das Sendersystem dynamisch an die temporäre Freigabe der Bandbreite im Netzwerk angepasst wird.

12. System zur Verbreitung eines zusätzlichen digitalen Inhalts von mindestens einem Sendersystem zu mindestens einem Empfänger, der einen digitalen Speicherraum umfasst, in mindestens einem unidirektionalen Netzwerk zur Übertragung von Daten, das ein digitales terrestrisches Fernsehnetzwerk oder ein Satellitenfernsehnetzwerk ist, wobei die übertragenen Daten primäre Daten enthalten, die unter temporärer Freigabe von Bandbreite mit variabler Bitrate ausgesandt werden,
**dadurch gekennzeichnet, dass** das System zur Übertragung eines zusätzlichen digitalen Inhalts vom Sendersystem zu mindestens einem Empfänger unter Verwendung der temporär freigegebenen Bandbreite und zum lokalen Speichern des zusätzlichen digitalen Inhalts in mindestens einem Empfänger eingerichtet ist,
der zusätzliche digitale Inhalt Multimediadateien und Daten mit Bezug auf die Verwaltung des genannten Inhalts durch den Empfänger enthält, mindestens ein Teil des zusätzlichen digitalen Inhalts in Abhängigkeit von den mit Bezug versehenen Daten aus dem digitalen Speicherraum des Empfängers gelöscht wird, der zu einem Benutzer hin übertragene zusätzliche digitale Inhalt nach einem dem Empfänger gehörenden Schlüssel verschlüsselt und beim Empfänger gespeichert wird und die Verbreitung des zusätzlichen digitalen Inhalts unabhängig von einer vorhergehenden Anforderung, den zusätzlichen digitalen Inhalt zurückzuerhalten, bewirkt wird, und
das Sendersystem Aktualisierungen des im Speicherraum eines jeweiligen Empfängers gespeicherten zusätzlichen digitalen Inhalts bewirkt, indem es ein Streichen der ältesten aus der Liste der Multimediadateien erlaubt, um Platz für neue zu schaffen.

## Claims

1. Method of broadcasting digital content in a unidirectional video data transmission network, the network being a digital terrestrial television network or a satellite television network, the network comprising a transmitter system and a plurality of receivers, including a digital storage space, the digital content including primary data sent in variable amounts freeing bandwidth temporarily, method **characterized by** the fact that an additional digital content is transmitted from the transmitter system to at least one receiver using at least the temporarily freed bandwidth, said additional digital content being stored locally in at least one receiver,
by the fact that the additional digital content includes multimedia files and data relating to the management of said content by the receiver, by the fact that at least part of the additional digital content is deleted from the digital storage space of the receiver as a function of said data, by the fact that the additional digital content transmitted to a user is encrypted and stored on the receiver using an encryption key specific to the receiver and by the fact that the broadcasting of the additional digital content is done independently of a previous request to obtain in return the additional digital content, the transmitter system making updates of the additional digital content stored in the digital storage space of each receiver by allowing eliminating from the list said oldest multimedia files to make room for the new ones.

2. Method according to claim 1, wherein the additional digital content is broadcasted in the transmission network at a fixed bit rate during the broadcasting of the additional digital content.

3. Method according to claim 1, wherein the additional digital content is broadcast continuously in the data transmission network at a variable bit rate.

4. Method according to claim 1, wherein the additional digital content is broadcasted non-continuously in the data transmission network and wherein, in the event of an interruption, the broadcasting of the content continues after reception of information relating to the bandwidth temporarily freed in said network.

5. Method according to the preceding claim, wherein the continuation of the broadcasting of the additional digital content is done by broadcasting only packets of the content not yet broadcasted.

6. Method according to any ones of the preceding claims, wherein the network is a multichannel network and in which the additional digital content is broadcasted as a function of the temporarily freed bandwidth for each channel.

7. Method according to the two immediately preceding claims, wherein the continuation of the broadcasting in the network is done on at least one channel different from the channel or channels used to broadcast the content before the interruption.

8. Method according to any ones of the preceding claims, wherein the additional digital content includes data relating to the fraction of the storage space to be allocated to storing the additional digital content.

9. Method according to the preceding claim, wherein at least one multimedia file acceptance filter is applied by the receiver as a function of a user profile, and wherein only multimedia files not rejected by the filter are stored by the receiver.

10. Method according to any ones of the preceding claims, wherein the data transmission network includes at least two sub-networks and wherein the broadcasting by the transmitter system of the additional digital content to the receiver is adapted as a function of the available bandwidth in each sub-network.

11. Method according to any ones of the preceding claims, the transmitter system being dynamically slaved to the temporary freeing of the bandwidth in the network.

12. System of broadcasting additional digital content from at least one transmitter system to at least one receiver, including a digital storage space, in at least one unidirectional data transmission network, the network being a digital terrestrial television network or a satellite television network, the transmitted data including primary data transmitted at a variable bit rate freeing bandwidth temporarily,
the system being **characterized by** the fact that it is configured to transmit an additional digital content from the transmitter system to at least one receiver using the temporarily freed bandwidth, and to store said additional digital content locally in at least one receiver,
system **characterized by** the fact that the additional digital content includes multimedia files and data relating to the management of said content by the receiver, by the fact that at least part of the additional digital content is deleted from the digital storage space of the receiver as a function of said data, by the fact that the additional digital content transmitted to a user is encrypted and stored on the receiver using an encryption key specific to the receiver, and by the fact that the broadcasting of the additional digital content is done independently of a previous request to obtain in return the additional digital content, the transmitter system making updates of the additional digital content stored in the digital storage space of each receiver by allowing eliminating from the list said oldest multimedia files to make room for the new ones.
